# EUROPÄISCHE PATENTSCHRIFT

(11) **EP 3 023 370 B1**
(45) Veröffentlichungstag und Bekanntmachung des Hinweises auf die Patenterteilung: **09.08.2017**
(21) Anmeldenummer: 14193681.5
(22) Anmeldetag: 18.11.2014
(51) Int. Cl.: B65G 59/06, B65G 59/10

(54) **Denester mit verstellbarem Schrägmagazin**
Denester with adjustable inclined cartridge
Dépileur doté d'un chargeur oblique réglable

(43) Veröffentlichungstag der Anmeldung: 25.05.2016
(73) Patentinhaber: MULTIVAC Sepp Haggenmüller SE & Co. KG, 87787 Wolfertschwenden (DE)
(72) Erfinder: Bieringer, Stefan, 87730 Bad Grönenbach (DE); Taghipour, Alireza, 87439 Kempten (DE)
(74) Vertreter: Grünecker Patent- und Rechtsanwälte PartG mbB

(56) Entgegenhaltungen:
- JP-A- 2002 179 248
- NL-A- 7 806 978

## Beschreibung

Die Erfindung bezieht sich auf einen Denester mit den Merkmalen des Anspruchs 1. Ein Denester im Sinne der Erfindung ist eine Abstapelvorrichtung für Schalen zum Einsatz an einer Verpackungsmaschine in Form einer Schalenverschließmaschine (engl.: traysealer).

Aus der US 5,064,093 ist ein Denester mit einem vertikal ausgerichteten Magazin zur Aufnahme eines Stapels von Schalen bekannt. Aus der US 4,048,915 ist ein Denester mit einem gegenüber der Abwurffläche geneigten Magazin bekannt. In beiden Fällen ist die Anzahl der Schalen beziehungsweise das Gewicht des Schalenstapels begrenzt, da ansonsten die Auflagekraft des Schalenflansches auf die Entstaplerschrauben so groß wird, dass sich der Schalenflansch verformen kann. Während des Entstapelvorgangs der einzelnen Schalen verringert sich die Auflagekraft kontinuierlich, bis das Magazin leer ist. Ein gattungsgemäßer Denester geht ferner aus der JP 2002-179248 hervor, die den Oberbegriff des Anspruchs 1 offenbart. Aufgabe der vorliegenden Erfindung ist es, einen Denester bereitzustellen, der eine höhere Anzahl von Schalen aufnehmen kann, um seltener das Magazin nachfüllen zu müssen, wobei die Auflagekraft während des Entstapelvorgangs weitestgehend konstant bleiben soll.

Diese Aufgabe wird gelöst durch einen Denester mit den Merkmalen des Anspruchs 1. Vorteilhafte Weiterbildungen der Erfindung sind in den Unteransprüchen angegeben.

Der erfindungsgemäße Denester umfasst ein Magazin zur Aufnahme wenigstens eines Stapels von Schalen, wobei das Magazin eine erste vertikale Führung und eine zweite Führung umfasst, wobei die zweite Führung gegenüber der ersten Führung eine Neigung aufweist. Der Denester zeichnet sich dadurch aus, dass die Neigung verstellbar ist. Der Vorteil gegenüber einem starren System besteht darin, dass der Stapel mit den Schalen deutlich vergrößert werden kann und somit die Kapazität gesteigert wird. Gleichzeitig verbessert sich die Zuverlässigkeit des Abstapelvorgangs durch eine konstantere Auflagekraft.

Dabei ist die Neigung selbsttätig verstellbar, um automatisch eine dem Stapel entsprechende Neigung zu erhalten, die für einen optimierten Abstapelprozess sorgt.

Vorzugsweise ist die Neigung in einem Winkel von 30° bis 70°, vorzugsweise von 50° bis 70°, verstellbar, um eine weitestgehend konstante und an die Eigenschaften der Schalen bzw. des Stapels von Schalen angepasste Auflagekraft des Schalenflansches beispielsweise auf die Abstapelschrauben zu erhalten. Der Schalenflansch ist die seitlich nach außen überstehende Randfläche, die von den Entstaplerschrauben erfasst wird, um einzelne Schalen vom Stapel zu trennen und auf eine Transporteinheit abzuwerfen.

Eine dritte gekrümmte Führung ist zwischen der ersten und zweiten Führung vorgesehen, um einen Übergang zwischen der den Stapel von Schalen aufnehmenden zweiten Führung und der vertikalen Führung, die die Schalen den Abstapelschrauben zuführt, herzustellen

In einer besonders vorteilhaften Ausführung weist die dritte Führung eine äußere Führung mit einem äußeren Radius auf, wobei der äußere Radius veränderbar ist, um die Bewegung der Schalen bzw. des Stapels von Schalen entlang des Übergangs beispielsweise hinsichtlich der Reibung der Schalenflansche an den Führungsinnenseiten zu optimieren und somit die Prozesssicherheit des Denesters zu erhöhen.

Bevorzugt sind die erste, zweite und dritte Führung bezüglich ihrer Innenabmessungen verstellbar, um auf verschiedene Außenabmessungen eines Schalenflansches, nämlich Länge und Breite, anpassbar zu sein.

Vorzugsweise weist die zweite Führung eine Länge von wenigstens 600 mm auf.

Bevorzugt ist die zweite Führung drehbar an einem Gestell des Denesters angebracht, um eine Neigungsverstellung auf eine konstruktiv einfache Weise zu ermöglichen.

In einer vorteilhaften Ausführung ist wenigstens ein Federelement als Verbindung zwischen der zweiten Führung und einem Rahmen des Denesters vorgesehen, um in Abhängigkeit des Gewichtes des Stapels automatisch die Neigung anzupassen.

Vorzugsweise ist das Federelement eine Gasdruckfeder, die eine annähernd konstante Druckkraft über den Verstellweg aufweist.

Dabei ist vorzugsweise eine Federkraft des Federelements einstellbar, um die automatische Neigungsverstellung auf verschiedene Gewichte bei unterschiedlichen Formen, Größen und/oder Gewichten von Schalen anpassen zu können.

Im Folgenden wird ein vorteilhaftes Ausführungsbeispiel der Erfindung anhand einer Zeichnung näher erläutert. Im Einzelnen zeigen:
- Fig. 1: einen erfindungsgemäßen Denester,
- Fig. 2: eine Seitenansicht des Denesters in einer ersten Stellung und
- Fig. 3: eine Seitenansicht des Denesters in einer zweiten Stellung.

Gleiche Komponenten sind in den Figuren durchgängig mit gleichen Bezugszeichen versehen.

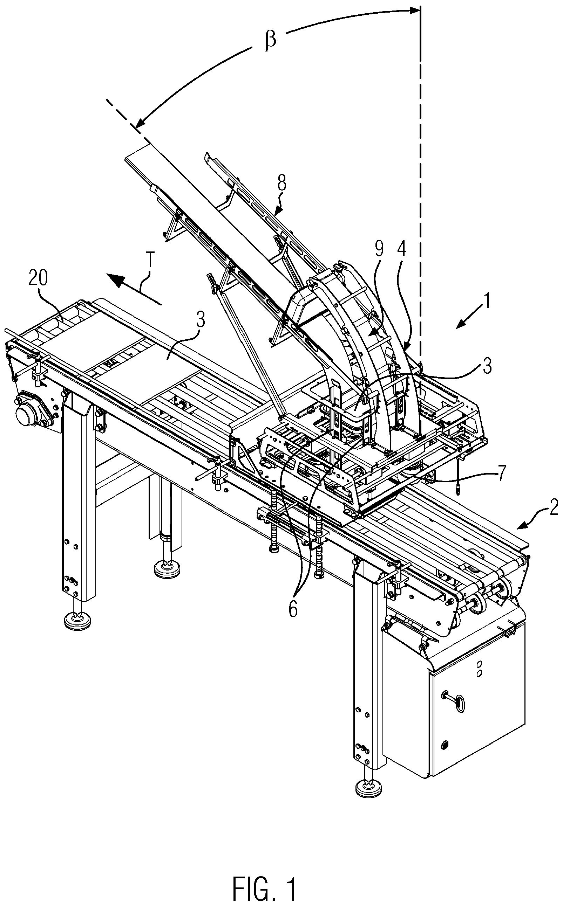

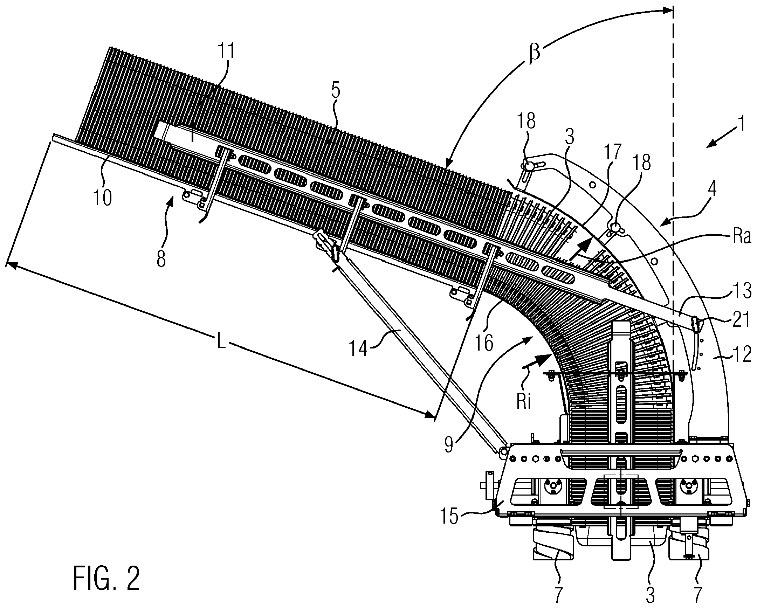

Fig. 1 zeigt einen erfindungsgemäßen Denester 1, der auf einer Transporteinheit 2 für Schalen 3 angeordnet ist. Der Denester 1 umfasst ein Magazin 4 zur Aufnahme eines Stapels 5 von Schalen 3, wie in Fig. 2 gezeigt. Das Magazin 5 weist eine erste vertikale Führung 6 im Bereich mehrerer Abstapelschrauben 7 auf sowie eine zweite Führung 8 im oberen Bereich des Magazins 4. Die zweite Führung 8 für den Stapel 5 weist relativ zu der ersten Führung 6 oder zu einer Vertikalen eine Neigung ß auf. Zwischen der ersten Führung 6 und der zweiten Führung 8 ist eine dritte gekrümmte Führung 9 angebracht. Neue Schalen 3 werden auf der zweiten Führung 8 aufgelegt und rutschen gravitationsbedingt automatisch in Richtung erste Führung 6. Einzelne auf die Transporteinheit 2 abgestapelte Schalen 3 werden mittels angetriebener Transportbänder 20 in einer Transportrichtung T einer nächsten Station, beispielsweise einer Füllstation einer Schalenverschließmaschine, zugeführt.

Fig. 2 zeigt in einer Seitansicht den Denester 1 mit einem gefüllten Magazin 4 in einer ersten Stellung. In dieser ersten Stellung weist die zweite Führung 8 gegenüber der ersten vertikalen Führung 6 eine Neigung ß von beispielsweise 70° auf. Die zweite Führung 8 umfasst eine untere Auflage 10 und zwei seitlich angeordnete Anlagen 11 auf. Die untere Auflage 10 und die zwei Anlagen 11 sind starr miteinander verbunden. Die zweite Führung 8 ist mittels der zwei Anlagen 11 an einem Gestell 12 des Denesters 1 drehbar angeordnet, indem jeweils ein Ende 13 der Anlagen 11 beispielsweise mittels einer Schrauben- oder Bolzenverbindung 21 am Gestell 12 gelagert ist. Zwei Gasdruckfedern 14 sind mit jeweils einem ihrer Enden mit der zweiten Führung 8 und mit dem anderen Ende mit einem Rahmen 15 des Denesters 1 verbunden und stützen somit den Stapel 5 bzw. die zweite Führung 8 gegen den Rahmen 15 ab. Die zweite Führung 8 weist beispielsweise eine Länge L von 600 mm auf.

Die Funktionsweise der Neigungsverstellung der zweiten Führung 8 wird im Folgenden näher erläutert. Der Denester 1 stapelt mittels der Entstaplerschrauben 7 einzelne Schalen ab. Weitere Schalen 3 des Stapels 5 rutschen automatisch nach. Dies führt im laufenden Betrieb zu einer Verringerung der Höhe des Stapels 5 und zu einer Reduzierung des Gewichts durch die Schalen 3 an der zweiten Führung 8. Bei Denestern 1 mit einer hohen Abstapelleistung kann der Stapel 5 innerhalb weniger Minuten aufgebraucht sein. So ist ein ständiges Nachfüllen erforderlich.

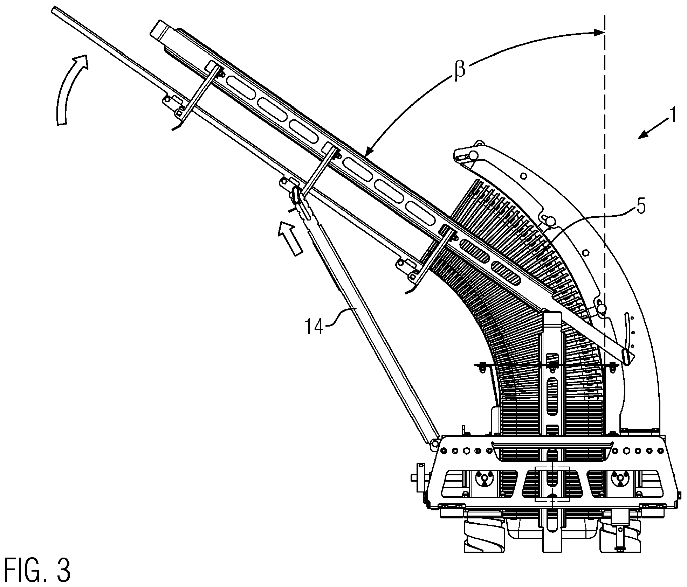

Fig. 3 zeigt in einer Seitansicht den Denester 1 mit einem teilentleerten Magazin 4 in einer zweiten Stellung. Die abnehmende Gewichtskraft durch die verringerte Anzahl von Schalen 3 im Stapel 5 führt dazu, dass die Gasdruckfedern 14 die zweite Führung 8 immer weiter in Pfeilrichtung nach oben drücken bzw. die Neigung vergrößern, d.h. den Winkel ß verringern, je weniger Schalen 3 sich auf der zweiten Führung 8 befinden. Die Neigung ß in Figur 3 weist einen Winkel von 55° auf. Über die Druckkraft und/oder die Einbaulage der Gasdruckfedern 14 kann die Neigung ß in Abhängigkeit zum Gewicht der Schalen 3 beeinflusst werden. Somit kann der Druck des Stapels 5 auf die unterste abzustapelnde Schale 3 annähernd konstant gehalten werden. Denkbar ist auch eine Ausführung, bei der die Gasdruckfeder 14 durch einen Pneumatikzylinder ersetzt wird und mittels eines Druckreglers, der in Abhängigkeit des Drucks des Stapels 5 auf die unterste abzustapelnde Schale 3 regelbar ist, einen Kraftverlauf aufweist, um die Neigung ß entsprechend des Stapels 5 selbsttätig einzustellen. Als weitere Alternative kann auch ein linearmotorischer Antrieb anstatt der Gasdruckfeder 14 vorgesehen sein.

Die dritte Führung 9 umfasst eine innere Führung 16 mit einem inneren Radius Ri und eine äußere Führung 17 mit einem äußeren Radius Ra. Die äußere Führung 17 ist an mehreren Befestigungspunkten 18 mit dem Gestell 12 verbunden und jeder dieser Befestigungspunkte 18 ist in seiner Lage zur äußeren Führung 17 und/oder zum Gestell 12 veränderbar. Diese führt dazu, dass Krümmung der äußeren Führung 17 gegenüber den Schalen 3 anpassbar ist, um ein Verklemmen oder eine zu hohe Reibung der Schalen 3 im Magazin 4 in der dritten Führung 9 zu verhindern.

## Patentansprüche

1. Denester (1) mit einem Magazin (4) zur Aufnahme wenigstens eines Stapels (5) von Schalen (3), wobei das Magazin (4) eine erste vertikale Führung (6) und eine zweite Führung (8) umfasst, wobei die zweite Führung (8) gegenüber der ersten Führung (6) eine Neigung (ß) aufweist, wobei eine dritte gekrümmte Führung (9) zwischen der ersten und zweiten Führung (8) vorgesehen ist **dadurch gekennzeichnet, dass** die Neigung (ß) selbsttätig verstellbar ist.

2. Denester nach Anspruch 1, **dadurch gekennzeichnet, dass** die Neigung (ß) in einem Winkel von 30° bis 70° verstellbar ist.

3. Denester nach einem der vorangehenden Ansprüche, **dadurch gekennzeichnet, dass** die dritte Führung (9) eine äußere Führung (17) mit einem äußeren Radius (Ra) aufweist, wobei der äußere Radius (Ra) veränderbar ist.

4. Denester nach einem der vorangehenden Ansprüche, **dadurch gekennzeichnet, dass** die erste (6), zweite (8) und dritte Führung (9) bezüglich ihrer Innenabmessungen verstellbar sind, um an verschiedene Außenabmessungen einer Schale (3), nämlich Länge und Breite einer Schale (3), anpassbar zu sein.

5. Denester nach einem der vorangehenden Ansprüche, **dadurch gekennzeichnet, dass** die zweite Führung (8) eine Länge (L) von wenigstens 600 mm aufweist.

6. Denester nach einem der vorangehenden Ansprüche, **dadurch gekennzeichnet, dass** die zweite Führung (8) drehbar an einem Gestell (12) des Denesters (1) angebracht ist.

7. Denester nach einem der vorangehenden Ansprüche, **dadurch gekennzeichnet, dass** wenigstens ein Federelement (14) als Verbindung zwischen der zweiten Führung (8) und einem Rahmen (15) des Denesters (1) vorgesehen ist.

8. Denester nach Anspruch 7, **dadurch gekennzeichnet, dass** das Federelement (14) eine Gasdruckfeder ist.

9. Denester nach Anspruch 7 oder 8, **dadurch gekennzeichnet, dass** eine Federkraft des Federelements (14) einstellbar ist.

## Claims

1. A denester (1) comprising a magazine (4) for accommodating at least one stack (5) of trays (3), wherein the magazine (4) comprises a first vertical guide (6) and a second guide (8), and said second guide (8) is inclined at an inclination (β) relative to said first guide (6), wherein a third curved guide (9) is provided between said first (6) and said second guide (8), **characterized in that** the inclination (β) is automatically adjustable.

2. The denester according to claim 1, **characterized in that** the inclination (β) is adjustable within an angle of 30° to 70°.

3. The denester according to one of the preceding claims, **characterized in that** the third guide (9) comprises an outer guide (17) with an outer radius (Ra), said outer radius (Ra) being changeable.

4. The denester according to one of the preceding claims, **characterized in that** the first (6), second (8) and third guide (9) are adjustable with respect to their inside dimensions, so that they can be adapted to various outside dimensions of a tray (3), viz. to the length and width of a tray (3).

5. The denester according to one of the preceding claims, **characterized in that** the second guide (8) has a length (L) of at least 600 mm.

6. The denester according to one of the preceding claims, **characterized in that** the second guide (8) is rotatably attached to a framework (12) of the denester (1).

7. The denester according to one of the preceding claims, **characterized in that** at least one spring element (14) is provided as a connection between the second guide (8) and a frame (15) of the denester (1).

8. The denester according to claim 7, **characterized in that** the spring element (14) is a gas compression spring.

9. The denester according to claim 7 or 8, **characterized in that** a spring force of the spring element (14) is adjustable.

## Revendications

1. Dépileur (1) comprenant un magasin-chargeur (4) destiné à recevoir au moins une pile (5) de barquettes (3), le magasin-chargeur (4) comprenant un premier guide vertical (6) et un deuxième guide (8), le deuxième guide (8) présentant une inclinaison (β) par rapport au premier guide (6), et un troisième guide courbe (9) étant prévu entre le premier guide et le deuxième guide (8),
**caractérisé en ce que** l'inclinaison (β) est réglable de manière automatique.

2. Dépileur selon la revendication 1, **caractérisé en ce que** l'inclinaison (β) est réglable d'un angle de 30° à 70°.

3. Dépileur selon l'une des revendications précédentes, **caractérisé en ce que** le troisième guide (9) comprend un guide extérieur (17) avec un rayon extérieur (Ra), le rayon extérieur (Ra) pouvant être modifié.

4. Dépileur selon l'une des revendications précédentes, **caractérisé en ce que** le premier (6), le deuxième (8) et le troisième guide (9) sont réglables quant à leurs dimensions intérieures, en vue de pouvoir être adaptés à des dimensions extérieures différentes d'une barquette (3), à savoir longueur et largeur d'une barquette (3).

5. Dépileur selon l'une des revendications précédentes, **caractérisé en ce que** le deuxième guide (8) présente une longueur (L) d'au moins 600 mm.

6. Dépileur selon l'une des revendications précédentes, **caractérisé en ce que** le deuxième guide (8) est monté de manière rotative sur une structure de support (12) du dépileur (1).

7. Dépileur selon l'une des revendications précédentes, **caractérisé en ce qu'**il est prévu au moins un élément de ressort (14) en tant que liaison entre le deuxième guide (8) et un cadre (15) du dépileur (1).

8. Dépileur selon la revendication 7, **caractérisé en ce que** l'élément de ressort (14) est un ressort à pression de gaz.

9. Dépileur selon la revendication 7 ou la revendication 8, **caractérisé en ce qu'**une force de ressort de l'élément de ressort (14) est réglable.
